# EUROPÄISCHE PATENTSCHRIFT

(11) **EP 0 494 327 B1**
(45) Veröffentlichungstag und Bekanntmachung des Hinweises auf die Patenterteilung: **10.04.1996**
(21) Anmeldenummer: 91100247.5
(22) Anmeldetag: 09.01.1991
(51) Int. Cl.: H02M 3/335

(54) **Sperrwandler-Schaltnetzteil**
Flyback switching power supply
Alimentateur à découpage à récupération

(43) Veröffentlichungstag der Anmeldung: 15.07.1992
(73) Patentinhaber: SIEMENS AKTIENGESELLSCHAFT, D-80333 München (DE)
(72) Erfinder: Paulik, Ernst, W-8891 Hilgertshausen (DE); Dangschat, Rainer, W-8011 Landsham (DE)

(56) Entgegenhaltungen:
- DE-A- 3 032 034
- DE-A- 3 706 692
- US-A- 4 277 824
- SIEMENS COMPONENTS, Band 25, Nr. 3, 1990, Seiten 107-109; "SMPS ICs for consumer electronics"

## Beschreibung

Die Erfindung bezieht sich auf ein Sperrwandler-Schaltnetzteil, mit den folgenden Merkmalen:
- Das Schaltnetzteil enthält ein Halbleiterschaltelement zum getakteten Anliegen einer aus einer Netzwechselspannung gewonnenen Spannung an eine Primärwicklung eines Transformators;
- es enthält eine Steuereinrichtung zum pulsbreitenmodulierten Ansteuern eines Halbleiterschaltelements mit einer Eingangsklemme zum Anlegen einer Versorgungsspannung und einer Bezugspotentialklemme;
- es enthält eine Anlaufschaltung, die ausgangsseitig an die Eingangsklemme sowie die Bezugspotentialklemme der Steuereinrichtung geschaltet ist;
- die Anlaufschaltung weist eine ohmsche Einrichtung und eine kapazitive Einrichtung auf, die unmittelbar mit einem Anschluß der ohmschen Einrichtung verbunden ist.

Sperrwandler-Schaltnetzteile weisen heutzutage ein Halbleiterschaltelement zum getakteten Anlegen einer aus einer Netzwechselspannung gewonnenen Spannung an eine Primärwicklung eines Transformators auf. Das Halbleiterschaltelement wird dabei von einer Steuereinrichtung pulsbreitenmoduliert angesteuert. Diese Steuereinrichtung wird über eine Eingangsklemme und eine Bezugspotentialklemme mit einer Speisespannung versorgt. Während der Anlaufphase des Schaltnetzteils, also unmittelbar nach dem Einschalten, wird die Speisespannung von einer Anlaufschaltung bereitgestellt, während nach dem Anlaufen des Schaltnetzteils die Speisespannung von einer Regelungswicklung mit nachgeschaltetem Gleichrichter des Schaltnetzteils bereitgestellt wird.

Beschrieben sind solche Sperrwandler-Schaltnetzteile mit Anlaufschaltungen beispielsweise in Siemens Components 28, 1990, Heft 3, Seite 107 bis 109, der Siemens-Produktionsformation "Funktion und Anwendung des Sperrwandler-IC TDA 4605", Bestellnr. B111-B6090 und dort insbesondere in Bild 9 auf Seite 8 sowie in der DE-A 30 32 034.

Die Anlauffschaltungen in diesen Sperrwandler-Schaltnetzteilen dienen dazu, einer zum Anlegen der Versorgungsspannung vorgesehenen Eingangsklemme der Steuereinrichtung eine vorgegebene genügend große Spannung bereitzustellen. Liegt eine solche genügend große Spannung an, schaltet die Steuereinrichtung ein. Erst dann gibt die Steuereinrichtung Impulse an das Halbleiterschaltelement ab, wodurch die Regelungswicklung des Transformators im Sperrwandler-Schaltnetzteil Energie enthält. Die in der Regelungswicklung induzierten Impulse reichen dann aus, um über einem Gleichrichter und eine Speichereinrichtung die Stromversorgung der Steuereinrichtung zu gewährleisten.

Während der Anlaufphase werden bei den bekannten Sperrwandler-Schaltnetzteilen mit jeder positiven Halbwelle eine eingangsseitig an einem Brückengleichrichter gelegten Netzspannung - an die das Sperrwandler-Schaltnetzteil eingangsseitig angeschlossen ist - ein Kondensator über mindestens einen Widerstand geladen. In der DE-A-30 32 034 ist zum Widerstand noch eine Diode 3 in Reihe geschaltet. Der Widerstand kann auch ein Kaltleiter sein. Erreicht die Spannung an diesem zu ladenden Kondensator die oben erwähnte vorgegebene Größe, dann schaltet die Steuereinrichtung ein. Die zum Laden notwendigen positiven Halbwellen der Netzspannung erscheinen bei einer Netzfrequenz von 50/60 Hz nur alle 20/16,7 msec.

Bei einer Netzwechselspannung von beispielsweise 220 V und einer Dimensionierung des Widerstandes von 10 kOhm und des Kondensators von 100 µF wird die vorgegebene genügend hohe Spannung bei der aus der DE-A-30 32 034 bekannten Anlaufschaltung nach 10 positiven Halbwellen, also nach ca. 200 msec erreicht, wenn als Steuereinrichtung der integrierte Schaltkreis TDA 4600 von Siemens eingesetzt wird.

In der deutschen Offenlegungsschrift DE 37 06 692 ist eine Anschwinghilfsschaltung für ein Schaltnetzteil gezeigt, die an die Ausgangsseite eines Brückengleichrichters angeschlossen ist. Diese Schaltung enthält eine Zenerdiode, durch die eine Versorgungsspannung für einen Multivibrator bereitgestellt wird. Der Multivibrator erzeugt einen Ausgangstakt zur Ansteuerung eines Transistors, über den ein Ladekondensator durch den Ausgang des Brückengleichrichters geladen wird. Der Ladekondensator speist einen Impulsgeber zum Zerhacken der Primärspannung des Schaltnetzteils.

Der Erfindung liegt die Aufgabe zugrunde, ein Sperrwandler-Schaltnetzteil mit einer Anlaufschaltung anzugeen, das sich durch ein schnelleres Anlaufverhalten auszeichnet.

Diese Aufgabe wird dadurch gelöst, daß
- die Anlaufschaltung eingangsseitig an zwei Ausgangsklemmen eines eine gleichgerichtete und im wesentlichen ungeglättete Netzwechselspannung liefernden Brückengleichrichters angeschlossen ist;
- die kapazitive Einrichtung von der gleichgerichteten und im wesentlichen ungeglätteten Netzwechselspannung aufladbar ist.

Weiterbildungen der Erfindung sind Gegenstand der Unteransprüche.

Wesentlich bei dem erfindungsgemäßen Sperrwandler-Schaltnetzteil ist die Tatsache, daß die Anlaufschaltung an die Ausgangsklemmen eines Brückengleichrichters des SperrwandlerSchaltnetzteiles angeschlossen ist, an dem eine gleichgerichtete und mindestens nahezu ungeglättete Netzwechselspannung abgreifbar ist. Diese ungeglättete Netzwechselspannung wird durch Weglassen eines sonst üblicherweise an die Ausgangsklemmen des Brückengleichrichters anzuschließenden Glättungskondensators erreicht. Durch diese gleichgerichtete und ungeglättete Netzwechselspannung liegen eingangsseitig an der Anlaufschaltung damit positive Sinushalbwellen mit im Vergleich zur eingangsseitigen Netzwechselspannung doppelter Frequenz an, wodurch die in der Anlaufschaltung vorhandene kapazitive Einrichtung einerseits doppelt so schnell aufgeladen werden kann und zum anderen ein erneuter Anlaufversuch früher wieder ermöglicht wird.

In einer bevorzugten Weiterbildung der Erfindung ist es vorgesehen, die Reihenschaltung des Halbleiterschaltelementes mit der Primärwicklung des Transformators ebenfalls an die ungeglättete gleichgerichtete Netzwechselspannung anzulegen. Wird zusätzlich das Halbleiterschaltelement durch die Steuereinrichtung nach Maßgabe mindestens eines an eine weitere Eingangsklemme der Steuereinrichtung anzulegenden Primärstormsignales angesteuert, das über eine an den Brückengleichrichterausgang geschaltete Einweggleichrichteranordnung mit nachgeschaltetem RC-Gliedes geführt ist, ist neben dem verbesserten Anlaufverhalten auch eine sinusförmige Stromaufnahme des Sperrwandler-Schaltnetzteiles aus dem Versorgungsnetz möglich. Dabei benötigt das Sperrwandler-Schaltnetzteil eingangsseitig nur einen einzigen Brückengleichrichter. Der beim Stand der Technik übliche Glättungskondensator entfällt zudem.

Die Erfindung wird im folgenden anhand von zwei Figuren näher erläutert. Es zeigen:
- FIG 1: ein Prinzipschaltbild eines erfindungsgemäßen Sperrwandler-Schaltnetzteiles und
- FIG 2: eine detaillierte Schaltungsanordnung eines Sperrwandler-Schaltnetzteiles nach FIG 1.

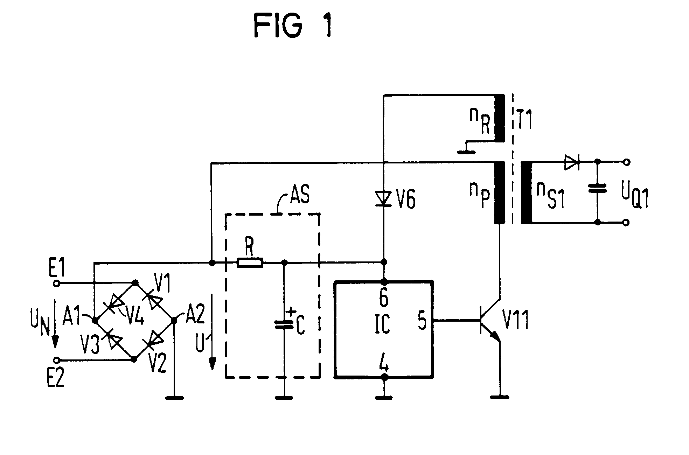

In FIG 1 ist ein Halbleiterschaltelement V11 dargestellt, das in Reihe zu einer Primärwicklung nₚ geschaltet ist. Diese Reihenschaltung der Primärwicklung nₚ und des Halbleiterschaltelementes V11 liegt an einer Spannung U, die taktweise durch Ein- und Ausschalten des Halbleiterschaltelementes V11 an die Primärwicklung nₚ des Transformators T1 gelegt wird. Eine Steuereinrichtung IC dient zum Ansteuern des Halbleiterschaltelementes V11. Diese Steuereinrichtung IC' weist eine Bezugspotentialklemme 4 und eine Eingangsklemme 6 zum Anlegen einer Versorgungsspannung auf. Ein Steuerausgang 5 der Steuereinrichtung IC ist mit einem Steuereingang des Halbleiterschaltelementes V11 in Verbindung.

Der Eingangklemme 6 wird auf zweierlei Art Versorgungsspannung zugeführt. Zum einen über eine zwischen einen Brückengleichrichter mit den Dioden V1, V2, V3, V4 und die Steuereinrichtung IC angeordnete Anlaufschaltung AS. Der Brückengleichrichter V1, V2, V3, V4 weist Eingangsklemmen E1, E2, auf, die an die Netzwechselspannung U_{N} anzuschließen sind. Eine Ausgangsklemme A1 dieses Brückengleichrichters V1, V2, V3, V4 ist an einen Anschluß einer ohmschen Einrichtung R der Anlaufschaltung AS angeschlossen, wobei ein anderer Anschluß dieser ohmschen Einrichtung R mit der Eingangsklemme 6 der Steuereinrichtung IC verbunden ist. Eine zweite Ausgangsklemme A2 des Brückengleichrichters liegt auf Bezugspotential. Die Anlaufschaltung AS weist zusätzlich neben der ohmschen Einrichtung R eine kapazitive Einrichtung C auf, die zwischen der Eingangsklemme 6 der Steuereinrichtung und deren Bezugspotentialklemme 4 geschaltet ist. Damit liegt die kapazitive Einrichtung C einerseits auf Bezugspotential und andererseits am ausgangsseitigen Anschluß der ohmschen Einrichtung R.

Die ohmsche Einrichtung R ist so dimensioniert, daß bei einer vorgegebenen minimalen Netzwechselspannung U_{N} ein Strom von mindestens 1 mA zum Laden der kapazitiven Einrichtung C verbleibt. Im einfachsten Fall ist die ohmsche Einrichtung ein Widerstand R und die kapazitive Einrichtung ein Kondensator C. Die ohmsche Einrichtung R kann z. b. auch einen Kaltleiter oder die Kombination eines ohmschen Widerstandes mit einem Kaltleiter aufweisen. Dieser Widerstand R kann zwischen 20 kOhm und 150 kOhm dimensioniert sein. Der Kondensator C weist einen Kapazitätswert von etwa 100 µF auf.

Werden die Eingangsklemmen E1, E2 des Brückengleichrichters V1, V2, V3, V4 an die Netzwechselspannung U_{N} gelegt, so lädt sich der Kondensator C über den Widerstand R der Anlaufschaltung AS mit jeder Halbwelle der gleichgerichteten Netzwechselspannung auf. Ist die Ladung am Kondenstor C groß genug und damit dessen Spannung, schaltet die Steuereinrichtung IC ein und das Halbleiterschaltelement V11 kann pulsbreitenmoduliert angesteuert werden. Als Folge davon werden in einer Sekundärwicklung n_{S1} und der Regelungswicklung n_{R} des Transformators Impulse induziert. Am ausgangsseitigen Ende einer an die Sekundärwicklung n_{S1} angeschlossenen Einweggleichrichteranordnung baut sich damit eine Ausgangsspannung U_{Q1} auf. Die in der Regelungswicklung n_{R} induzierten Impulse werden einem Einweggleichrichter V6 zugeführt, dessen Ausgang ebenfalls mit der Eingangsklemme 6 der Steuereinrichtung IC in Verbindung steht. Der Einweggleichrichter V6 ist eine Diode, deren Anodenanschluß an der Regelungswicklung n_{R} liegt und deren Katodenanschluß an die Eingangsklemme G der Steuereinrichtung geschaltet ist. Befindet sich das Sperrwandler-Schaltnetzteil im eingeschwungenen Zustand und damit im Regelbetrieb, wird die Stromversorgung über die Regelungswicklung n_{R} und den Einweggleichrichter V6 aufrechterhalten, da mit jedem Impuls der Kondensators C der Anlaufschaltung AS aufgeladen wird.

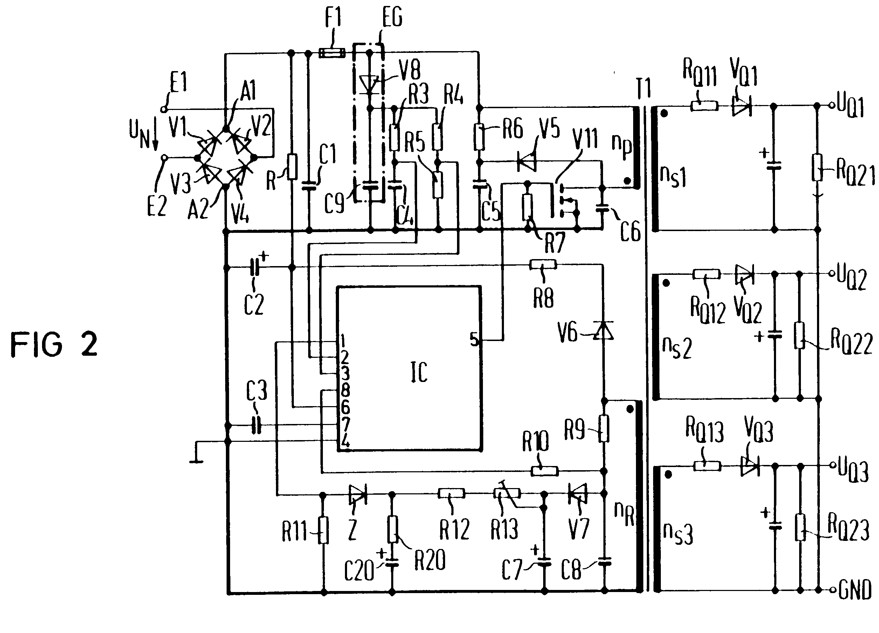

Gemäß einer Weiterbildung der Erfindung ist die vom Halbleiterschaltelement V11 an die Primärwicklung nₚ anzulegende Spannung, die an den Ausgangsklemmen A1, A2 des erwähnten Brückengleichrichters V1, V2, V3, V4 anstehende Spannung U. Aufgrund des Fehlens eines Glättungskondensators ist dies die bereits oben erwähnte gleichgerichtete und ungeglättete Spannung. Nähere Einzelheiten zu diese Schaltungsvariante werden im Zusammenhang mit FIG 2 erläutert.

Die Schaltungsanordnung von FIG 2 zeigt ein freischwingendes Sperrwandler-Schaltnetzteil, wie es die Erfindung vorschlägt. Bis auf die im folgenden noch näher zu beschreibenden und für die Erfindung wesentlichen Schaltungsunterschiede entspricht die Schaltungsanordnung von FIG 2 der Schaltung von Bild 25 in der bereits eingangs erwähnten Siemens Produktinformation, auf die hiermit zum Zwecke der Offenbarung ausdrücklich Bezug genommen wird. Im folgenden werden der besseren Übersichtlichkeit auch die dort bereits verwendeten Bezugszeichen weiter verwendet.

Als Halbleiterschaltelement V11 dient ein MOS-FET, der eine von einem Brückengleichrichter V1, V2, V3, V4 gleichgerichtete Wechselspannung U_{N} an eine erste Wicklung nₚ eines Transformators T1 periodenweise schaltet. Erfindungsgemäß ist die gleichgerichtete Wechselspannung nicht geglättet. Wenn überhaupt, sollte ein Kondensator C1 mit einer Kapazität kleiner als etwa 1 µF an die Ausgangsklemmen A1 und A2 des Brückengleichrichters V1, V2, V3, V4 geschaltet werden. Die Anlaufschaltung besteht in der Schaltungsanordnung von FIG 2 aus einem Widerstand R, der einerseits an die Ausgangsklemme A1 des Brückengleichrichters V1, V2, V3, V4 und andererseits an die Eingangsklemme 6 zur Spannungsversorgung der Steuereinrichtung IC geschaltet ist. Zwischen dieser Eingangsklemme 6 der Steuereinrichtung IC und Bezugspotential liegt der Kondensator C2, wie bereits in Zusammenhang mit FIG 1 erläutert. Wird als Steuereinrichtung IC der integrierte Schaltkreis TDA 4605 von Siemens eingesetzt, so hat sich ein Widerstandswert von 80 k bis 120 kOhm für den Widerstand R als vorteilhaft erwiesen. Der Kondensator C2 sollte einem Kapazitätswert von etwa 100 µF aufweisen. Damit ist die Anlaufschaltung mit dem Widerstand R und dem Kondensator C2 so dimensioniert, daß bei einer Netzunterspannung der Strom zum Laden des Kondensators C2 nicht unter 1mA absinkt. Bei Sperrwandler-Schaltnetzteilen mit der integrierten Schaltung TDA 4601 oder TDA 4600 ebenfalls von Siemens, sollte der Widerstand R in der Größenordnung von etwa 20 kOhm gewählt werden.

Die Spannungsversorgung an der Eingangsklemme 6 der Steuereinrichtung IC im Regelbetrieb erfolgt über die Diode V6, die mit ihrer Anode an die Regelungswicklung n_{R} und mit ihrer Kathode über einen Widerstand R8 an die Eingangsklemme 6 der Steuereinrichtung IC geschaltet ist.

Die Steuereinrichtung IC schaltet das Halbleiterschaltelement V11 nach Maßgabe eines an eine weitere Eingangsklemme 2 anzulegenden Primärstromsignales sowie vorzugsweise eines die Steuereinrichtung IC freigebenden und an eine weitere Eingangsklemme 3 anzulegenden Spannungssignales pulsweitenmoduliert ein und aus. In diesem Ausführungsbeispiel wird als Steuereinrichtung IC der bereits oben erwähnte integrierte Schaltkreis TDA 4605 eingesetzt. Das Primärstromsignal wird über eine an die Ausgangsklemme A1 des Brückengleichrichters V1, V2, V3, V4 geschaltete Einweggleichrichteranordnung EG mit nachgeschaltetem RC-Glied R3, C4, und das Spannungssignal durch einen der Einweggleichrichteranordnung EG nachgeschalteten Spannungsteiler R4, R5 bereitgestellt. Dazu ist hier beispielsweise die Ausgangsklemme A1 des Brückengleichrichters V1, V2, V3, V4 zweckmäßigerweise über eine Sicherung F1 an den Anodenanschluß einer Diode V8 gelegt, deren Kathodenanschluß einerseits über einen Kondensator C9 an die auf Bezugspotential liegende Ausgangsklemme A2 und andererseits an das RC-Glied R3, C4 und den Spannungsteiler R4, R5 geschaltet ist. Dieses RC-Glied R3, C4 weist die Reihenschaltung eines Widerstandes R3 und eines Kondensators C4 auf, die wie die beiden Widerstände R4, R5 des Spannungsteilers zwischen den Kathodenanschluß der Diode V8 und Bezugspotential geschaltet sind. Der Verbindungspunkt des Widerstandes R3 und Kondensators C4 ist mit der Eingangsklemme 2 und der Verbindungspunkt der Widerstände R4, R5 mit der Eingangsklemme 3 des integrierten Schaltkreises TDA 4605 in Verbindung.

In einer derartigen Schaltungsanordnung entstehen deutlich weniger Oberwellenströme auf dem Versorgungsnetz, als es bei den bisher bekannten Sperrwandler-Schaltnetzteilen üblich war. Diese geringen Oberwellenströme haben eine annähernd sinusförmige Stromaufnahme des erfindungsgemäßen Schaltnetzteiles zur Folge.

Die erfindungsgemäße Schaltungsanordnung von FIG 2 zeichnet sich zu den bisher bekannt gewordenen Sperrwandler-Schaltnetzteilen durch ein schnelleres Anlaufverhalten auf, wobei zusätzlich eine sinusförmige Stromaufnahme aus dem Versorgungsnetz gewährleistet wird. Erreicht wird dies durch den Einsatz eines einzigen Brükkengleichrichters, an dessen Ausgangsklemmen A1, A2 entgegen den bisher üblichen Sperrwandler-Schaltnetzteilen kein Glättungskondensator geschaltet ist.

## Patentansprüche

1. Sperrwandler-Schaltnetzteil mit den folgenden Merkmalen:
- Das Schaltnetzteil enthält ein Halbleiterschaltelement (V11) zum getakteten Anlegen einer aus einer Netzwechselspannung (U_{N}) gewonnenen Spannung an eine Primärwicklung (nₚ) eines Transformators (T1);
- es enthält eine Steuereinrichtung (IC) zum pulsbreitenmodulierten Ansteuern des Halbleiterschaltelements (V11) mit einer Eingangsklemme (6) zum Anlegen einer Versorgungsspannung und einer Bezugspotentialklemme (4);
- es enthält eine Anlaufschaltung (AS), die ausgangsseitig an die Eingangsklemme (6) sowie die Bezugspotentialklemme (4) der Steuereinrichtung (IC) geschaltet ist;
- die Anlaufschaltung (AS) weist eine ohmsche Einrichtung (R) und eine kapazitive Einrichtung (C) auf, die unmittelbar mit einem Anschluß der ohmschen Einrichtung (R) verbunden ist;
**dadurch gekennzeichnet**, daß
- die Anlaufschaltung (AS) eingangsseitig an zwei Ausgangsklemmen (Al, A2) eines eine gleichgerichtete und im wesentlichen ungeglättete Netzwechselspannung (U_{N}) liefernden Brückengleichrichters (V1, V2, V3, V4) angeschlossen ist;
- die kapazitive Einrichtung (C) von der gleichgerichteten und im wesentlichen ungeglätteten Netzwechselspannung (U_{N}) aufladbar ist.

2. Sperrwandler-Schaltnetzteil nach Anspruch 1,
**dadurch gekennzeichnet,**
daß die ohmsche Einrichtung (R) so dimensioniert ist, daß bei einer vorgegebenen minimalen Netzwechselspannung (U_{N}) ein Strom von mindestens 1 mA zum Laden der kapazitiven Einrichtung (C) verbleibt.

3. Sperrwandler-Schaltnetzteil nach Anspruch 1,
**dadurch gekennzeichnet**, daß die Anlaufschaltung (AS) einen zwischen einem Ausgangspluspol (A1) des Brückengleichrichters (V1, V2, V3, V4) und die Eingangsklemme (6) der Steuereinrichtung (IC) geschalteten ohmschen Widerstand (R) aufweist.

4. Sperrwandler-Schaltnetzteil nach einem der Ansprüche 1 bis 3,
**dadurch gekennzeichnet**, daß die Anlaufschaltung (AS) ausgangsseitig einen parallelgeschalteten Kondensator (C) aufweist.

5. Sperrwandler-Schaltnetzteil nach einem der Ansprüche 1 bis 4,
**dadurch gekennzeichnet,** daß die Ausgangsklemmen (A1, A2) des Brückengleichrichters (V1, V2, V3, V4) parallel zur Reihenschaltung des Halbleiterschaltelementes (V11) und der Primärwicklung (nₚ) geschaltet sind.

## Claims

1. Flyback converter switched-mode power supply having the following features:
- the switched-mode power supply contains a semiconductor switching element (V11) for the pulsed application of a voltage, which has been obtained from a mains AC voltage (U_{N}), to a primary winding (nₚ) of a transformer (T1);
- it contains a control device (IC) for pulse-width-modulated driving of the semiconductor switching element (V11) with an input terminal (6) for the application of a supply voltage, and a reference-earth potential terminal (4);
- it contains a starting circuit (AS) which is connected on the output side to the input terminal (6) and the reference-earth potential terminal (4) of the control device (IC);
- the starting circuit (AS) has a resistive device (R) and a capacitive device (C) which is directly connected to one connection of the resistive device (R);
characterized in that
- the starting circuit (AS) is connected on the input side to two output terminals (A1, A2) of a bridge rectifier (V1, V2, V3, V4) which supplies a rectified and essentially unsmoothed mains AC voltage (U_{N});
- the capacitive device (C) can be charged by the rectified and essentially unsmoothed mains AC voltage (U_{N}).

2. Flyback converter switched-mode power supply according to Claim 1, characterized in that the resistive device (R) is dimensioned such that, with a predetermined, minimal mains AC voltage (U_{N}), a current of at least 1 mA remains for charging the capacitive device (C).

3. Flyback converter switched-mode power supply according to Claim 1, characterized in that the starting circuit (AS) has a non-reactive resistor (R) which is connected between an output positive pole (A1) of the bridge rectifier (V1, V2, V3, V4) and the input terminal (6) of the control device (IC).

4. Flyback converter switched-mode power supply according to one of Claims 1 to 3, characterized in that the starting circuit (AS) has a parallel-connected capacitor (C) on the output side.

5. Flyback converter switched-mode power supply according to one of Claims 1 to 4, characterized in that the output terminals (A1, A2) of the bridge rectifier (V1, V2, V3, V4) are connected in parallel with the series circuit formed by the semiconductor switching element (V11) and the primary winding (nₚ).

## Revendications

1. Alimentation à découpage à accumulation ayant les particularités suivantes :
- l'alimentation à découpage comprend un élément interrupteur (V11) à semi-conducteur destiné à appliquer de façon cadencée une tension obtenue à partir d'une tension (UN) alternative de réseau à un enroulement (nₚ) primaire d'un transformateur (T1) ;
- l'alimentation comprend un dispositif (IC) de commande destiné à la commande, modulée en largeur d'impulsion, de l'élément (V11) interrupteur à semi-conducteur, ce dispositif (IC) de commande comportant une borne (6) d'entrée destinée à l'application d'une tension d'alimentation et une borne (4) de potentiel de référence ;
- l'alimentation comprend un circuit (AS) de démarrage, qui est branché du côté sortie à la borne (6) d'entrée ainsi qu'à la borne (4) de potentiel de référence du dispositif (IC) de commande ;
- le circuit (AS) de démarrage comporte un dispositif (R) résistif et un dispositif (C) capacitif, qui sont reliés directement à une borne du dispositif (R) résistif ;
caractérisée en ce que
- le circuit (AS) de démarrage est connecté du côté entrée à deux bornes (A1, A2) de sortie d'un redresseur (V1, V2, V3, V4) en pont fournissant une tension (UN) alternative de réseau redressée et essentiellement non lissée ;
- le dispositif (C) capacitif peut être chargé par la tension (UN) alternative de réseau redressée et essentiellement non lissée.

2. Alimentation à découpage à accumulation suivant la revendication 1,
caractérisée en ce que,
le dispositif (R) résistif a une valeur telle qu'il reste, pour une tension (U_{N}) alternative minimale prescrite de réseau, un courant d'au moins 1 mA pour charger le dispositif (C) capacitif.

3. Alimentation à découpage à accumulation suivant la revendication 1,
caractérisée en ce que le circuit (As) de démarrage comporte une résistance (R) ohmique branchée entre un pôle (A1) plus de sortie du redresseur (V1, V2, V3, V4) en pont et la borne (6) d'entrée du dispositif (IC) de commande.

4. Alimentation à découpage à accumulation suivant l'une des revendications 1 à 3,
caractérisée en ce que le circuit (AS) de démarrage comporte du côté sortie un condensateur (C) branché en parallèle.

5. Alimentation à découpage à accumulation suivant l'une des revendications 1 à 4,
caractérisée en ce que les bornes (A1, A2) de sortie du redresseur (V1, V2, V3, V4) en pont sont branchées en parallèle avec le circuit-série de l'élément (V11) interrupteur à semi-conducteur et de l'enroulement (nₚ) primaire.
